# EUROPÄISCHE PATENTANMELDUNG

(11) **EP 1 128 683 A2**
(43) Veröffentlichungstag der Anmeldung: **29.08.2001**
(21) Anmeldenummer: 01104263.7
(22) Anmeldetag: 22.02.2001
(51) Int. Cl.: H04Q 3/62

(54) **Einstellung von Schnittstellenfunktionen einer Nebenstellenanlage mittels mobilen RAM-Einheiten**

(30) Priorität: 23.02.2000 DE 10008443
(71) Anmelder: Tenovis GmbH & Co. KG, 60362 Frankfurt am Main (DE)
(72) Erfinder: Friedrich, Klaus-Georg, 61130 Nidderau-Heldenbergen (DE)
(74) Vertreter: Böckelen, Rainer

(57) **Zusammenfassung**

Die Fernmeldeanlage (10), insbesondere Nebenstellen-Fernmeldeanlage, enthält wenigstens eine Grundbaugruppe (11), die eine oder mehrere mit mindestens einer funktionsspezifischen Schnittstelle (12) versehene Unterbaugruppen (13) aufweist. Hierbei ist vorgesehen, dass die Fernmeldeanlage (10) eine Datenübertragungseinheit (14) aufweist, welche zur Einstellung der jeweiligen Schnittstellenfunktion mit einem programmierbaren Speichermittel wirkverbindbar ist.

## Beschreibung

Die Erfindung betrifft eine Fernmeldeanlage, insbesondere Nebenstellen-Fernmeldeanlage, mit wenigstens einer Grundbaugruppe, die eine oder mehrere mit mindestens einer funktionsspezifischen Schnittstelle versehene Unterbaugruppen aufweist, entsprechend dem einleitenden Teil des Anspruchs 1. Ferner bezieht sich die Erfindung auf ein Verfahren zum Festlegen und Einstellen von Schnittstellenfunktionen einer Fernmeldeanlage, gemäß dem Oberbegriff des Anspruchs 7.

### Stand der Technik

Fernmeldeanlagen, insbesondere Nebenstellen-Fernmeldeanlagen, der eingangs genannten Art sind bekannt. Dabei sind die auf den Unterbaugruppen der Fernmeldeanlagen angeordneten Schnittstellen als digitale Schnittstellen mit spezifischen Funktionen ausgebildet. Derartige, in der Fernmeldetechnik auftretende digitale Schnittstellen sind beispielsweise unter den Bezeichnungen S0, T0, Up0, Uk0, Takttransceiver oder V24 Testschnittstelle bekannt. Nachteilhafterweise ist die Flexibilität der bekannten Fernmeldeanlagen, insbesondere der Nebenstellen-Fernmeldeanlagen, in Bezug auf die bereitstellbaren Schnittstellenfunktionen nicht ausreichend, um den an diese gestellten Anforderungen vollständig zu genügen.

### Vorteile der Erfindung

Die erfindungsgemäße Fernmeldeanlage ist dadurch gekennzeichnet, dass sie eine Datenübertragungseinheit aufweist, welche zur Einstellung einer jeweiligen Schnittstellenfunktion mit einem programmierbaren Speichermittel wirkverbindbar ist. Mittels einer derartig ausgebildeten Fernmeldeanlage ist es in zuverlässiger, schneller und verhältnismäßig einfacher Weise möglich, die jeweils gewünschten Schnittstellenfunktionen an der Fernmeldeanlage einzustellen. Dabei erfolgt die Einstellung der jeweiligen Schnittstellenfunktion in besonders handhabungsfreundlicher Weise mittels eines programmierbaren Speichermittels, das mit der Datenübertragungseinheit der Fernmeldeanlage wirkverbindbar ist.

Mit Vorteil ist das Speichermittel in Bezug auf die Fernmeldeanlage extern programmierbar. Ein in Bezug auf die Fernmeldeanlage extern programmierbares Speichermittel erlaubt eine besonders handhabungsfreundliche und schnelle Einstellung von Schnittstellenfunktionen der Fernmeldeanlage.

Mit Vorteil weist die jeweilige Unterbaugruppe eine Mehrzahl an digitalen Schnittstellen und/oder an analogen Schnittstellen auf. Durch die Bereitstellung sowohl von digitalen als auch von analogen Schnittstellen an einer jeweiligen Unterbaugruppe wird eine maximale Flexibilität in Bezug auf die Schnittstellenfunktionen der Fernmeldeanlage erhalten. Bei den analogen Schnittstellen kann es sich beispielsweise um einen analogen Anschluss an einen Sprachspeicher, einen analogen Anschluss an einen Türfreisprechanschluss und/oder um einen analogen Teilnehmer-Anschluss handeln. Es ist somit in besonders flexibler Weise möglich, Unterbaugruppen verschiedener Art zu schaffen, welche mit verschiedenen Schnittstellen versehen sein können. Dabei kann es sich um in der Fernmeldetechnik zur Anwendung kommende Schnittstellen als auch um Sonderschnittstellen handeln.

Vorzugsweise ist das Speichermittel als mobile RAM-Einheit ausgebildet. Ein als mobile RAM-Einheit (Random Access Memory beziehungsweise Schreib-Leser-Speicher) ausgebildetes Speichermittel erlaubt in besonders handhabungsfreundlicher Weise eine schnelle und zuverlässige Einstellung der Schnittstellenfunktionen an der jeweiligen Unterbaugruppe der Fernmeldeanlage. Da das mobile Speichermittel von der Fernmeldeanlage trennbar ist, erfolgt die Programmierung des Speichermittels vorzugsweise nicht an der Fernmeldeanlage selbst, sondern an einer anderen, speziell dafür vorgesehenen und externen Einrichtung.

Gemäß einer bevorzugten Ausführungsform ist das Speichermittel mit einer in Bezug auf die Fernmeldeanlage externen elektronischen Datenverarbeitungsanlage zur Speicherung von fernmeldeanlagespezifischen Konfigurationsdaten wirkverbindbar. Die Programmierung des Speichermittels an einer separaten, speziell dafür vorgesehenen elektronischen Datenverarbeitungsanlage erlaubt in besonders zuverlässiger, schneller und handhabungsfreundlicher Weise das Festlegen der gewünschten Schnittstellenfunktionen für die jeweilige Unterbaugruppe der Fernmeldeanlage. Hierbei können in der elektronischen Datenverarbeitungsanlage speziell zum Festlegen von Schnittstellenfunktionen entwickelte Software-Konfigurationswerkzeuge zur Anwendung kommen.

Mit Vorteil weist die Datenübertragungseinheit eine zentrale Steuereinheit auf, die mit grundbaugruppenspezifischen Steuersystemen wirkverbunden ist, welche zur Einstellung der jeweiligen Schnittstellenfunktion mit zugehörigen Unterbaugruppen in Wirkverbindung stehen. Eine derart ausgebildete Datenübertragungseinheit erlaubt eine zuverlässige und schnelle Datenübertragung vom Speichermittel auf die jeweiligen Unterbaugruppen der Fernmeldeanlage. Dabei können die Unterbaugruppen verschiedener Art sein beziehungsweise eine unterschiedliche Anzahl an digitalen und/oder analogen Schnittstellen aufweisen.

Das erfindungsgemäße Verfahren zum Festlegen und Einstellen von Schnittstellenfunktionen einer Fernmeldeanlage ist durch folgende Verfahrensschritte gekennzeichnet:
- Eingeben von baugruppenspezifischen Schnittstellenfunktionen in ein Konfigurationsprogramm an einer elektronischen Datenverarbeitungsanlage;
- Wirkverbinden eines mobilen Speichermittels mit der elektronischen Datenverarbeitungsanlage;
- Einlesen von Konfigurationsdaten in das mobile Speichermittel;
- Wirkverbinden des mobilen Speichermittels mit einer Datenübertragungseinheit der Fernmeldeanlage;
- Einlesen der Konfigurationsdaten des mobilen Speichermittels in eine zentrale Steuereinheit der Fernmeldeanlage;
- Einstellen der Schnittstellenfunktionen in Abhängigkeit der eingelesenen Konfigurationsdaten.

Die Festlegung der Schnittstellenfunktionen für die jeweilige Fernmeldeanlage erfolgt somit auf einem mobilen Speichermittel an einer separaten elektronischen Datenverarbeitungsanlage, während die Einstellung der Schnittstellenfunktionen mittels des programmierten, mobilen Speichermittels an der Fernmeldeanlage stattfindet. Es sind somit vorteilhafterweise zum Festlegen und Einstellen von Schnittstellenfunktionen einer Fernmeldeanlage keinerlei Arbeiten an der Hardware der Unterbaugruppen erforderlich. Dabei sind die einzelnen Unterbaugruppen hinsichtlich ihrer Benutzereigenschaften in besonders flexibler und zuverlässiger Weise konfigurierbar.

Entsprechend einer bevorzugten Ausführungsvariante wird zum Festlegen und Einstellen der Schnittstellenfunktionen sowohl von digitalen Schnittstellen als auch von analogen Schnittstellen ein gemeinsames Konfigurationsprogramm verwendet. Eine gemeinsame Grundbaugruppen-Software zur Konfigurierung von digitalen und analogen Schnittstellen einer entsprechenden Unterbaugruppe ist besonders programmierfreundlich und erlaubt eine zuverlässige und schnelle Festlegung aller Schnittstellenfunktionen einer Fernmeldeanlage.

Weitere vorteilhafte Ausgestaltungen der Erfindung ergeben sich aus der Beschreibung.

### Zeichnung

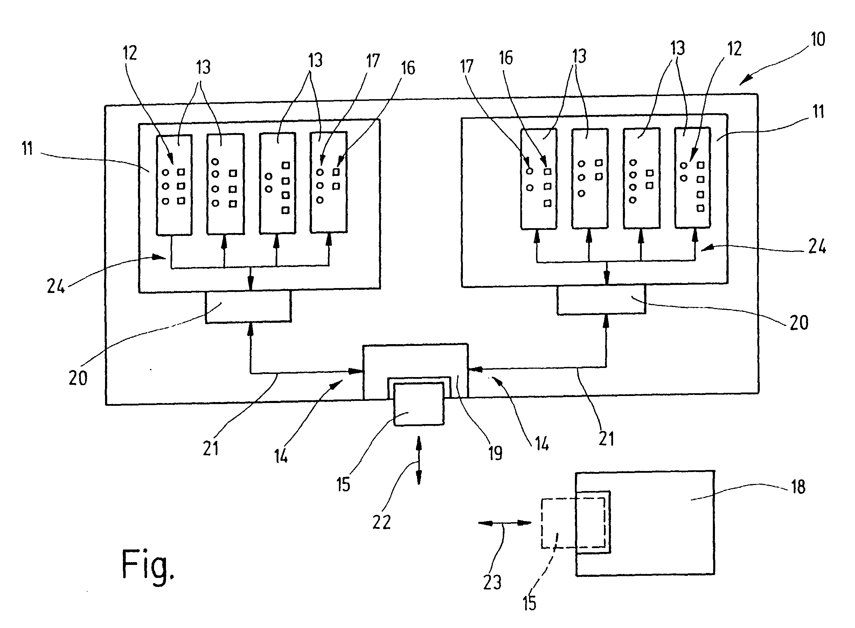

Die Erfindung wird nachfolgend in einem Ausführungsbeispiel anhand einer zugehörigen Zeichnung näher erläutert. In einer einzigen Figur ist eine erfindungsgemäße Fernmeldeanlage anhand eines Blockschaltbildes dargestellt.

### Beschreibung der Erfindung

Die Figur zeigt in schematischer Darstellung eine allgemein mit 10 bezeichnete Fernmeldeanlage, insbesondere Nebenstellen-Fernmeldeanlage. Die Fernmeldeanlage 10 weist gemäß diesem Ausführungsbeispiel zwei Grundbaugruppen 11 auf, welche jeweils mit einer Mehrzahl an Unterbaugruppen 13, im vorliegenden Fall mit vier Unterbaugruppen 13, versehen sind. Jede der Unterbaugruppen 13 weist eine Mehrzahl an funktionsspezifischen Schnittstellen 12 auf, wobei die Anzahl der Schnittstellen 12 für die jeweilige Unterbaugruppe 13 unterschiedlich sein kann. Die Fernmeldeanlage 10 weist eine Datenübertragungseinheit 14 auf, welche zur Einstellung der jeweiligen Schnittstellenfunktionen mit einem programmierbaren Speichermittel 15 gemäß Doppelpfeil 22 trennbar wirkverbunden ist. Die Datenübertragungseinheit 14 enthält eine zentrale Steuereinheit 19, welche mit grundbaugruppenspezifischen Steuersystemen mittels als Doppelpfeile 21 dargestellten Steuerleitungen wirkverbunden ist. Die zur einer jeweiligen Grundbaugruppe 11 zugehörigen Steuersysteme 20 dienen zur Einstellung der jeweiligen Schnittstellenfunktion und sind hierzu mit den zugehörigen Unterbaugruppen 13 mittels als Pfeile dargestellten Steuerleitungen 24 wirkverbunden. Die Unterbaugruppen 13 weisen jeweils eine Mehrzahl an digitalen Schnittstellen 16 und eine Mehrzahl an analogen Schnittstellen 17 auf. Das Speichermittel 15 ist mit einer in Bezug auf die Fernmeldeanlage 10 externen elektronischen Datenverarbeitungsanlage 18, welche vorzugsweise als programmierbare PC-Einheit ausgebildet sein kann, zur Speicherung von fernmeldeanlagespezifischen Konfigurationsdaten gemäß dem Doppelpfeil 23 wirkverbindbar. Dabei ist das Speichermittel 15 als mobile RAM-Einheit ausgebildet und somit in Bezug auf die Fernmeldeanlage 10 extern programmierbar.

Zum Festlegen und Einstellen von Schnittstellenfunktionen der Fernmeldeanlage 10 werden zunächst die gewünschten baugruppenspezifischen Schnittstellenfunktionen sowohl für die digitalen Schnittstellen 16 als auch für die analogen Schnittstellen 17 der jeweiligen Unterbaugruppe 13 in ein für beide Schnittstellenarten gemeinsames Konfigurationsprogramm an der elektronischen Datenverarbeitungsanlage 18 eingegeben. Das mobile Speichermittel 15 wird mit der elektronischen Datenverarbeitungsanlage 18 gemäß Doppelpfeil 23 wirkverbunden zum Einlesen von Konfigurationsdaten in das mobile Speichermittel 15. Anschließend wird das mobile Speichermittel 15 gemäß Doppelpfeil 23 von der elektronischen Datenverarbeitungsanlage 18 getrennt und mit der Datenübertragungseinheit 14 der Fernmeldeanlage 10 gemäß Doppelpfeil 22 wirkverbunden. Es erfolgt nun ein Einlesen der Konfigurationsdaten des mobilen Speichermittels 15 in die zentrale Steuereinheit 19 der Fernmeldeanlage 10, welche entsprechende grundbaugruppenspezifische Daten an die zugehörigen Steuersysteme 20 weiterleitet. Mittels der Steuersysteme 20 erfolgt das Einstellen der Schnittstellenfunktionen sowohl der digitalen Schnittstellen 16 als auch der analogen Schnittstellen 17 in Abhängigkeit der eingelesenen Konfigurationsdaten.

Die eigentliche Festlegung der Schnittstellenfunktionen erfolgt somit zeitlich getrennt von der späteren Einstellung der Schnittstellenfunktionen an der Fernmeldeanlage 10 aufgrund des Einsatzes einer separaten Datenübertragungseinheit 14 vorzugsweise unter Anwendung eines sowohl für die digitalen Schnittstellen 16 als auch für die analogen Schnittstellen 17 gemeinsamen Konfigurationsprogramms.

Die oben beschriebene Fernmeldeanlage 10 ist besonders vorteilhaft, da die einzelnen Schnittstellen der Unterbaugruppen hinsichtlich ihrer Anzahl bedarfsgerecht eingestellt und somit eingesetzt werden können. Dabei ist der Einsatz von digitalen Schnittstellen 16 und von analogen Schnittstellen 17 auf einer Grundbaugruppe 11 beziehungsweise Unterbaugruppe 13 möglich (Mischbestückung), wobei gegebenenfalls hierdurch die Baugruppenanzahl der Fernmeldeanlage 10 reduziert werden kann. Damit ist die Realisierung von kleineren Fernmeldeanlagen möglich oder es können Baugruppensteckplätze für andere, weitere Baugruppen freigehalten werden. Ferner können die einzelnen Funktionen der Fernmeldeanlage 10 an einem externen PC-Gerät ("Personal Computer") festgelegt werden.

Die Fernmeldeanlage (10), insbesondere Nebenstellen-Fernmeldeanlage, enthält wenigstens eine Grundbaugruppe (11), die eine oder mehrere mit mindestens einer funktionsspezifischen Schnittstelle (12) versehene Unterbaugruppen (13) aufweist. Hierbei ist vorgesehen, dass die Fernmeldeanlage (10) eine Datenübertragungseinheit (14) aufweist, welche zur Einstellung der jeweiligen Schnittstellenfunktion mit einem programmierbaren Speichermittel wirkverbindbar ist.

## Patentansprüche

1. Fernmeldeanlage, insbesondere Nebenstellen-Fernmeldeanlage, mit wenigstens einer Grundbaugruppe, die eine oder mehrere mit mindestens einer funktionsspezifischen Schnittstelle versehene Unterbaugruppen aufweist, **dadurch gekennzeichnet**, dass die Fernmeldeanlage (10) eine Datenübertragungseinheit (14) aufweist, welche zur Einstellung einer jeweiligen Schnittstellenfunktion mit einem programmierbaren Speichermittel (15) wirkverbindbar ist.

2. Fernmeldeanlage nach Anspruch 1, **dadurch gekennzeichnet**, dass das Speichermittel (15) in Bezug auf die Fernmeldeanlage (10) extern programmierbar ist.

3. Fernmeldeanlage nach einem der vorhergehenden Ansprüche, **dadurch gekennzeichnet**, dass die jeweilige Unterbaugruppe (13) eine Mehrzahl an digitalen Schnittstellen (16) und/oder an analogen Schnittstellen (17) aufweist.

4. Fernmeldeanlage nach einem der vorhergehenden Ansprüche, **dadurch gekennzeichnet**, dass das Speichermittel (15) als mobile RAM-Einheit ausgebildet ist.

5. Fernmeldeanlage nach einem der vorhergehenden Ansprüche, **dadurch gekennzeichnet,** dass das Speichermittel (15) mit einer in Bezug auf die Fernmeldeanlage (10) externen elektronischen Datenverarbeitungsanlage (18) zur Speicherung von fernmeldeanlagespezifischen Konfigurationsdaten wirkverbindbar ist.

6. Fernmeldeanlage nach einem der vorhergehenden Ansprüche, **dadurch gekennzeichnet**, dass die Datenübertragungseinheit (14) eine zentrale Steuereinheit (19) aufweist, die mit grundbaugruppenspezifischen Steuersystemen (20) wirkverbunden ist, welche zur Einstellung der jeweiligen Schnittstellenfunktion mit zugehörigen Unterbaugruppen (13) in Wirkverbindung stehen.

7. Verfahren zum Festlegen und Einstellen von Schnittstellenfunktionen einer Fernmeldeanlage insbesondere entsprechend Anspruch 1, **gekennzeichnet durc**h folgende Verfahrensschritte:
- Eingeben von baugruppenspezifischen Schnittstellenfunktionen in ein Konfigurationsprogramm an einer elektronischen Datenverarbeitungsanlage (18);
- Wirkverbinden eines mobilen Speichermittels (15) mit der elektronischen Datenverarbeitungsanlage (18);
- Einlesen von Konfigurationsdaten in das mobile Speichermittel (15);
- Wirkverbinden des mobilen Speichermittels (15) mit einer Datenübertragungseinheit (14) der Fern meldeanlage (10);
- Einlesen der Konfigurationsdaten des mobilen Speichermittels (15) in eine zentrale Steuereinheit (19) der Fernmeldeanlage (10);
- Einstellen der Schnittstellenfunktionen in Abhän gigkeit der eingelesenen Konfigurationsdaten.

8. Verfahren nach Anspruch 7, **dadurch gekennzeichnet,** dass zum Festlegen und Einstellen der Schnittstellenfunktionen sowohl von digitalen Schnittstellen (16) als auch von analogen Schnittstellen (17) ein gemeinsames Konfigurationsprogramm verwendet wird.
